# EUROPÄISCHE PATENTSCHRIFT

(11) **EP 2 667 820 B1**
(45) Veröffentlichungstag und Bekanntmachung des Hinweises auf die Patenterteilung: **12.11.2014**
(21) Anmeldenummer: 12700991.8
(22) Anmeldetag: 24.01.2012
(51) Int. Cl.: A61C 8/00

(54) **ZAHNERSATZ-SYSTEM**
DENTURE SYSTEM
SYSTÈME DE PROTHÈSE DENTAIRE

(30) Priorität: 25.01.2011 CH 1182011
(43) Veröffentlichungstag der Anmeldung: 04.12.2013
(73) Patentinhaber: Dentalpoint AG, 8048 Zürich (CH)
(72) Erfinder: BOLLETER, Philip, CH-8003 Zürich (CH)
(74) Vertreter: Rentsch Partner AG
(86) Internationale Anmeldenummer: PCT/EP2012/051069
(87) Internationale Veröffentlichungsnummer: WO 2012/101135

(56) Entgegenhaltungen:
- EP-A1- 2 143 398
- WO-A1-00/54696
- US-A- 5 092 771

## Beschreibung

Die vorliegende Erfindung betrifft ein Zahnersatz-System umfassend ein Implantat zur Osseointegration in einen Kieferknochen und ein in das Implantat einzusetzendes Abutment gemäss Oberbegriff des Patentanspruchs 1.

### GEBIET DER ERFINDUNG

Unter den Begriffen Zahnimplantat oder Dentalimplantat werden seit Jahren verschiedenste Zahnersatz-Systeme auf dem Markt angeboten und zum Teil sehr erfolgreich eingesetzt. Die Begriffe Zahnimplantat oder Dentalimplantat stehen in der Regel für den Zahnersatz per se und dürfen nicht mit dem eigentlichen Implantatkörper verwechselt werden, der als Zahnwurzelersatz korrekterweise als Implantat bezeichnet wird. Im Folgenden werden die Begriffe Zahnimplantat und Implantatkörper oder Implantat klar getrennt, wobei das Zahnimplantat den Zahnersatz bezeichnet, der den Implantatkörper zur Verankerung im Kieferknochen umfasst. Auf dem Markt herrschen zweiteilige und dreiteilige Zahnimplantate vor, wobei sich die dreiteiligen Zahnimplantate zum Ersatz eines Einzelzahns in der Regel aus einem enossalen Implantat oder Implantatkörper, einem Abutment (auch Verbindungsteil oder Implantatpfosten genannt) und einer Krone, einer Brücke oder einer anderen Prothetik aufbauen.

Das Abutment erlaubt es dem Zahnarzt, die Krone gegenüber dem Implantat auszurichten, so dass ihre genaue Stellung im Zahnbogen nicht allein von der Lage des Implantatkörpers abhängig ist. Hierfür muss das Abutment im Implantat gemäss einer vordefinierten Ausrichtung positioniert werden, nachdem das Implantat im Kiefer verankert ist.

Gebräuchliche Implantatformen umfassen Blatt-, Nadel-, Schrauben-, Zylinder- und konische Implantate, die jeweils bei unterschiedlichen Indikationen zum Einsatz kommen. Grundsätzlich können subperiostale und enossale Implantate eingesetzt werden. Häufig verwendete enossale Implantate sind im Wesentlichen zylindrisch aufgebaut und werden in eine Bohrung im Kieferknochen oder direkt in den Kieferknochen eingeschraubt oder eingeschlagen. Am koronalen Ende sind die Implantate mit einer offenen Blindbohrung zur Aufnahme des Abutment versehen. In den letzten Jahrzehnten hat sich vor allem Titan als Material durchgesetzt, da es ein dem Kieferknochen ähnliches e-Modul hat und ausgezeichnet biokompatibel ist. Alternativ können Keramiken, z. B. Zirkonoxid-Keramik, verwendet werden. Bei solchen Zahnimplantaten wird die Krone, meist aus herkömmlicher Zahnkeramik und/oder Metall, auf das Abutment oder die einteilige Implantat-/Abutmentkonstruktion geklebt oder zementiert oder mittels mechanischer Mittel daran befestigt.

Aus der EP 0879024 B1 ist ein System bekannt, bei dem ein massives konisches Abutment in ein Implantat eingeschraubt wird. Eine Aufnahmeöffnung des Implantates ist entsprechend ebenfalls konisch geformt. Eine derartige konische Form ist bei Zahnärzten beliebt, da sie die Implantation, insbesondere auch das Nehmen der Abdrücke und Herstellen von Mastermodellen vereinfacht. Die konische ImplantatAbutment-Verbindung stellt hohe Anforderungen an die Passgenauigkeit der Bauteile, da sie sowohl kraft- wie auch formschlüssig ist. Da von den Dentalimplantaten beim Kauen erhebliche Wechsellasten aufgenommen werden müssen, führt schon die geringste Mikrobeweglichkeit zwischen den verschraubten Bauteilen zu Abrasion und Verschleiss. Ferner stellt die Verschraubung von Abutment und Implantat einen aufwendigen Arbeitsschritt dar, bei dem zunächst die Gewinde in einander greifen müssen und dann durch in der Regel mehrfaches Drehen das Abutment axial in das Implantat eingeführt werden.

Aus der WO 2006/084346A1 ist ein Implantatsystem mit einem Abutment aus einem nicht-metallischen Material bekannt, das ein Implantat und einen Prothesenträger umfasst, der wiederum ein Abutment und ein Kragenelement umfasst. Wesentliche Merkmale des Implantatsystems sind, dass die Teile des Implantatsystems linear ineinander geschoben und untereinander verklebt werden. Das Abutment weist zwischen einem im Wesentlichen zylindrischen Basalpfosten und einem Kopfteil einen zylindrischen Halsteil mit einem unteren Vorsprung auf, welcher als Vieleck ausgeführt wird und der radialen Positionierung des Abutments in einer korrespondierenden Aufnahme in der Schulter des Implantats dient. Die zentrale Bohrung im Implantat zur Aufnahme des Basalpfostens ist mit einem Innengewinde versehen, das das Einschrauben einer Schraubkappe oder eines Platzhalters während des Abheilprozesses ermöglicht. Nach dem Abheilen wird ein Kragenelement über den Halsbereich des Abutments gestülpt und der Basalpfosten in die Gewindebohrung des Implantates eingeklebt. Im Abutment ist ein zentraler durchgehender axialer Kanal zum Abfliessen des Klebstoffes angebracht. Ein Nachteil dieses Systems liegt im grossen technischen Aufwand zur Herstellung des zentralen Axialkanals im Abutment und den mechanischen Belastungen und Spannungen, welchen das Abutment dadurch ausgesetzt ist.

Aus der EP 1728486 A1 ist ein Implantatsystem mit einem Implantat und einem Abutment bekannt, bei dem das Abutment mit Mitteln zur rotationsgesperrten Halterung des Abutment im Implantat versehen ist. Eine Aufnahmeöffnung im Implantat ist derart ausgeführt, dass das Abutment mit einem basalen Anteil im Wesentlichen formschlüssig in die Aufnahmeöffnung in der gewünschten Winkelposition in das Implantat eingesteckt werden kann und in dieser Position durch eine separate Schraube am Implantat befestigt wird.

Bei den bekannten Systemen, bei welchen ein Abutment in ein Implantat eingeschoben wird, muss das Abutment unter Kraftaufwand in Position gehalten werden, während sich z. B. eine stoffschlüssige Verbindung durch das Klebematerial ausbildet. Durch die Einpresskraft wird Klebstoff entlang der aufeinander liegenden Flächen verteilt, kann teilweise aus den Zwischenräumen hervor quellen und während des Aushärtens die Positionierung zwischen Abutment und Implantat ändern, z. B. durch Anheben des Abutments im Implantat (Pumpeffekt). Dies führt insbesondere bei Bone-Level Implantaten zu Schwierigkeiten. Beim Einsetzen des Abutments steht ein Behandler oft unter Zeitdruck, da das Klebematerial oftmals in kurzer Zeit aushärtet. Der Behandler kann dabei die korrekte Positionierung des Abutments gegenüber dem Implantat kaum kontrollieren und es besteht die Gefahr einer Fehlstellung. Für einen Patienten ist die Wartezeit bis das Abutment festgeklebt ist unangenehm, da andauernder Druck auf den Kieferknochen ausgeübt wird, dem er Stand halten muss.

Die WO 00/54696 A1 offenbart eine Implantanordnung für künstliche Zähne umfassed ein Implantat und ein Abutment. Das Implantat weist dabei eine Kavität mit verschiedenen Abschnitten auf. Einer der Abschnitte ist als hinterschnittene ringförmige Ausnehmung gestaltet und verfügt über einen longitudinalen Schlitz. Das Abutment weist einen Stumpf und eine Nase auf . Im eingeführten Zustand koppelt diese Nase durch axiales Einführen mit einer anschliessenden Drehbewegung in den Schlitz ein.

Die US 5 092 771 A beschreibt eine drehbare dentale Implantatstütze. Das Abutment wird in einer Art Schlüssel-Schlossprinzip in der Implantatöffnung fixiert. Der Implantatspfosten weist hierzu am proximalen Ende einen Vorsprung auf, der in einen Schlüsseldurchgang eingreift. Ein Anschlag, der das Abutment im Implantat in axialer Richtung fixiert, wird durch die Hinterschneidung gebildet.

Die EP 2143398 A1 offenbart ein Zahnimplantat mit einem elastischen Zwischenelement. In der EP 2143398 A1 wird ein Implantatspfosten beschrieben, der über eine Steck-Drehverbindung in einem Implantatkörper fixierbar ist. Als Absätze sind hierfür am Implantatkörper Verriegelungszähne vorgesehen. Der Anschlag wird durch eine sogenannte Komplementärkontur gebildet. Beim Einführen des Implantatpfostens in den Implantatkörper, werden die Verriegelungszähne durch die Komplementärkontur durchgeführt. Die Anschliessende Fixierung erfolgt durch eine Drehbewegung.

### HINTERGRUND DER ERFINDUNG

Der Erfindung liegt die Aufgabe zu Grunde, ein Zahnersatz-System zur Verfügung zu stellen, das die oben genannten Nachteile reduziert. Ferner ist es eine Aufgabe, ein Zahnersatz-System zu schaffen, das eine gute mechanische Stabilität aufweist, die Gefahr einer Spaltbildung oder Fehlstellung minimiert, in einfacher und exakter Weise positioniert werden kann, Unannehmlichkeiten für den Patienten mindert sowie kostengünstig ausgelegt ist.

Diese Aufgabe wird von der Erfindung durch ein Zahnersatz-System nach Anspruch 1 gelöst. Vorteilhafte Ausgestaltungen und weitere Ausführungsbeispiele sind in den abhängigen Ansprüchen beschrieben.

Ein Zahnersatz-System nach der vorliegenden Erfindung umfasst ein Implantat zur Osseointegration in einen Kieferknochen und ein Abutment mit einem Einsatzstamm, der in eine Aufnahmeöffnung des Implantats einsetzbar ist. Am Einsatzstamm ist wenigstens ein zumindest teilweise radial zu einer Längsachse des Einsatzstamms, bzw. der Aufnahmeöffnung, verlaufender Absatz ausgebildet, der als Verriegelungsabsatz dienen kann. An einer Innenumfangsfläche der Aufnahmeöffnung ist wenigstens ein zumindest teilweise radial verlaufender Anschlag vorgesehen. Dabei ist in einer ersten Drehposition zwischen Einsatzstamm und Implantat, der Einführdrehposition, das Abutment relativ zum Implantat axial beweglich, vorzugsweise ausschliesslich axial beweglich. Absätze und Anschläge sind in dieser Position in Umfangsrichtung versetzt angeordnet und können in axialer Richtung an einander vorbei geführt werden. Das Abutment wird in die Aufnahmeöffnung eingesetzt und axial in der Einführdrehposition in die Aufnahmeöffnung eingeführt bis es in einer Ausgangsposition ist, in welcher ein Absatz in einer axialen Einführrichtung hinter einem Anschlag angeordnet ist. Von der Ausgangsposition kann das Abutment in eine zweite Drehposition, der Eingriffsdrehposition oder Verriegelungsdrehposition, gedreht werden. Der Einsatzstamm wird relativ zum Implantat um einen Winkel in Bezug auf die erste Drehposition um die Längsachse soweit verdreht, dass wenigstens ein Absatz einen Anschlag derart axial hintergreift, dass das Abutment im Implantat in axialer Richtung fixiert ist. Das heisst, dass eine Bewegung in eine entgegengesetzte axiale Richtung entgegen der Einführrichtung zwischen Implantat und Abutment blockiert ist. Ein Anschlag in der Aufnahmeöffnung des Implantats kann somit als Blockieranschlag dienen, an welchem ein Absatz des Einsatzstamms in der Eingriffsdrehposition anschlägt, womit ein Herausziehen oder Herausdrücken des Abutments aus dem Implantat blockiert wird. Der wenigstens eine Anschlag im Implantat kann daher in der zweiten Drehposition mit dem wenigstens einen Absatz des Abutments eine formschlüssige axiale Verriegelung zwischen Implantat und Abutment ausbilden. Soweit ist das Zahnersatz-System nach der vorliegenden Erfindung aus der WO 00/54 696 A1 bekannt.

Efindungsgemäss ist zwischen Implantat und Abutment eine Drehbegrenzung für die rotatorische Verriegelung vorgesehen. Hierfür ist in der Aufnahmeöffnung ein Rotationsanschlag und am Einsatzstamm ein Rotationsgegenanschlag vorgesehen, die eine Drehbewegung des Abutments relativ zu m Implantat begrenzen. Die rotatorischen Anschläge können z. B. als Rippen oder Kanten an den Umfangsflächen von Implantat und Abutment vorgesehen sein, die im Wesentlichen in axialer Richtung verlaufen. Sobald das Abutment axial in die Ausgangsposition eingeführt wurde, erfolgt die Drehbewegung bis der Rotationsgegenanschlag am Rotationsanschlag anstösst und ein Weiterdrehen blockiert wird. Die rotatorischen Anschläge sind vorzugsweise derart positioniert, dass die Drehbewegung bereits nach einem Drehweg von unter 120° blockiert wird, vorzugsweise unter 60°, insbesondere unter 45°. Grundsätzlich kann aber auch eine halbe oder eine beinahe volle Umdrehung vorgesehen werden.

Bei einem Zahnersatz-System nach der vorliegenden Erfindung sind Absätze und Anschläge derart positioniert, dass das Abutment nach dem Eindrehen in die Verriegelungsdrehposition eine gewünschte Stellung relativ zum Implantat einnimmt. Um das Abutment im Implantat zu befestigen kann z. B. in bekannter Weise ein Klebstoff verwendet werden. Mit Hilfe der axialen Verriegelung bleibt das Abutment in der vorgesehenen axialen Stellung im Implantat, ohne dass axial Druck auf das Abutment aufgewendet werden muss. Trotz einem Widerstand durch den Klebstoff oder durch seitliches Herauspressen des Klebstoffs bleibt das Abutment axial ohne Kraftaufwand fixiert und kann in der gewünschten Stellung durch Aushärten des Klebstoffs befestigt werden.

Ein Absatz des Einsatzstamms verläuft im Wesentlichen in Umfangsrichtung um den Einsatzstamm. Eine Angriffsfläche eines Absatzes, an welcher ein Anschlag des Implantats angreift, verläuft dabei vorzugsweise in einer Ebene senkrecht zur Längsachse des Einsatzstamms. Die Angriffsfläche kann aber auch leicht schräg zu dieser Ebene, bzw. einer Umfangslinie ausgebildet sein, d. h. beispielsweise entlang einer Wendellinie um die Längsachse. In Umfangsrichtung weist ein Absatz zumindest eine Unterbrechung oder Ausnehmung in wenigstens einem Umfangsbereich auf. Die Unterbrechung ist wenigstens so gross, dass ein Anschlag des Implantats axial hindurch geführt werden kann. Vorzugsweise sind entlang der Umfangsrichtung des Einsatzstamms mehrere Absätze ausgebildet, die im Wesentlichen radial in unterschiedliche Richtungen vom Einsatzstamm abragen. Zwischen den einzelnen Absätzen sind jeweils Unterbrechungen vorgesehen. Vorzugsweise sind ebenso viele Anschläge in der Aufnahmeöffnung vorgesehen, wie Absätze am Abutment. Mehrere Absätze erlauben eine sichere Verriegelung und Positionierung des Abutments im Implantat Ferner können Anschlagkräfte zwischen Absätzen und Anschlägen auf mehrere Anschlagflächen verteilt werden.

Mehrere Absätze können symmetrisch zur Längsachse des Einsatzstamms um den Umfang angeordnet sein. Beispielsweise können zwei oder vier Absätze spiegelsymmetrisch angeordnet sein. Im Falle von drei oder fünf Absätzen können diese punktsymmetrisch ausgerichtet sein. Natürlich können auch mehr als fünf Absätze vorgesehen werden. Die Absätze des Abutments können z. B. als N-kant-Absatz am Einsatzstamm ausgebildet sein, wobei N die Anzahl der Absätze bezeichnet. Dabei stehen die einzelnen Absätze z. B. in Form von Rippen mit axialen Kanten ab, zwischen welchen die Unterbrechungen verlaufen. Die Anschläge im Implantat werden entsprechend der Position der Absätze, bzw. der Unterbrechungen zwischen den Absätzen, angeordnet. Auf diese Weise kann eine Art Schlüssel/Schloss-System realisiert werden, bei dem ein Abutment nur in bestimmten Drehpositionen an den Anschlägen vorbei geführt und in die Ausgangsposition gebracht werden.

Die mehreren Absätze können auf einer Ebene in Umfangsrichtung, d. h. senkrecht zur Längsachse, um den Einsatzstamm verteilt sein. Es können auch Absätze auf unterschiedlichen Ebenen entlang der Längsachse, d. h. an unterschiedlichen axialen Positionen vorgesehen werden. So können die Absätze und Anschläge innerhalb der Aufnahmeöffnung eine Verriegelung an verschiedenen axialen Positionen entlang des Abutments ermöglichen. Vorzugsweise sind die Absätze an einem proximalen Ende des Einsatzstamm vorgesehen und das Abutment kann somit am tiefsten Punkt im Implantat verriegelt werden. Die Absätze können aber auch beispielsweise mittig am Einsatzstamm angeordnet werden.

In der Aufnahmeöffnung des Implantats kann ein Einführanschlag und am Einsatzstamm kann ein Einführgegenanschlag vorgesehen sein, die beim Einsetzen des Abutments in das Implantat die axiale Einführbewegung des Abutment begrenzen. Der Anstoss zwischen Einführanschlag und Einführgegenanschlag kann somit die axiale Ausgangsposition für die Drehbewegung definieren, von welcher ausgehend das Abutment von der Einführdrehposition in die Eingriffsdrehposition gebracht wird. In dieser axialen Ausgangsposition ist der Einsatzstamm vorzugsweise vollständig in das Implantat eingeführt. Einführanschlag und Einführgegenanschlag sind vorteilhafter Weise derart vorgesehen, dass sie auch nach einem Verdrehen des Abutments in die Eingriffsposition aneinander anstossen. Das Abutment ist somit in beide axiale Richtungen gesichert und wird fest in dieser Position gehalten. Vorzugsweise liegt der Einsatzstamm mit einer Basalfläche auf einer Grundfläche in der Aufnahmeöffnung auf, wenn das Abutment in die Ausgangsposition eingeführt ist. Somit bildet die Basalfläche einen Einführanschlag und die Grundfläche einen Einführgegenanschlag.

Die axialen Anschläge in Form von Absätzen am Einsatzstamm und Anschlägen in der Aufnahmeöffnung des Implantat und die rotatorischen Anschläge, gegeben durch Rotationsanschlag und Rotationsgegenanschlag, bilden gemeinsam eine formschlüssige axiale und rotatorische Verriegelung des Abutment im Implantat. Die Verriegelungsposition bestimmt dabei eine vordefinierte Ausrichtung des Abutments relativ zum Implantat, so dass ein auf dem Abutment anzubringender Zahnaufbau ebenfalls in einer vordefinierten Ausrichtung vorgesehen werden kann.

Gemäss der vorliegenden Erfindung können wenigstens ein Absatz des Einsatzstamms und wenigstens ein Anschlag in der Aufnahmeöffnung derart ausgebildet sein, dass Abutment und Implantat durch eine Art Bajonettverbindung miteinander verbunden werden.

Sofern die Angriffsflächen der Absätze leicht schräg zu einer orthogonalen Ebene zur Längsachse ausgebildet sind, wie oben erwähnt, kann auch eine kraftschlüssige Verbindung zwischen Abutment und Implantat realisiert werden. Dabei werden die Absätze beim Drehen entlang der schrägen Angriffsflächen geführt und können in eine Art Klemmsitz gebracht werden.

Die Absätze am Einsatzstamm können durch Vertiefungen in einer Mantelfläche oder durch radial von der Mantelfläche hervorstehende Vorsprünge, wie etwa Rippen, oder durch eine Kombination aus beidem ausgebildet sein. Der Einsatzstamm kann dabei eine Mantelfläche mit einer nicht kreisrunden Umfangsform aufweisen, die in eine entsprechend nicht kreisrunde Innenumfangsform der Aufnahmeöffnung des Implantats passt, wobei ein Spiel in Drehrichtung zwischen Abutment und Implantat verbleibt. Grundsätzlich kann der Einsatzstamm auch nur im Umfangsbereich der Absätze ein nicht kreisrunde Umfangsform aufweisen. Mantelfläche und Innenumfangsform können beispielsweise polygonal geformt sein, so dass es eine oder mehrere Drehpositionen gibt, in welcher das Abutment in das Implantat eingesetzt werden kann. Die Bereiche der Umfangsflächen mit geringerem Radius können dabei als Rotationsanschläge zwischen Abutment und Implantat dienen, so dass Abutment und Implantat nur innerhalb der Umfangssektoren mit grösserem Radius um dieses Spiel verdreht werden können. Die Absätze können dabei durch Vertiefungen z. B. in Form von Einschnitten oder Auskehlungen in der Mantelfläche vorgesehen werden, so dass die Absätze im Wesentlichen nicht radial über die Mantelfläche hervorstehen. Die Anschläge können durch Vorsprünge in der Innenumfangsform der Aufnahmeöffnung ausgebildet sein, die im Wesentlichen radial von der Umfangsfläche hervorstehen. Der Zwischenraum zwischen Mantelfläche des Abutments und Innenumfangsfläche des Implantats kann als Drainagekanal zwischen Abutment und Implantat zum Ableiten überschüssigen Klebstoffs dienen.

Ferner können am Innenumfang der Aufnahmeöffnung in axialer Richtung verlaufende Führungsflächen oder Führungsrillen vorgesehen sein, zwischen welchen das Abutment, bzw. die Absätze, beim Einführen in das Implantat axial geführt werden und eine Drehbewegung während dessen zumindest weitgehend verhindert wird. Die Führungsflächen können z. B. radial nach innen vorstehenden. Oder die Führungsflächen werden durch eine nicht kreisrunde Innenumfangsfläche der Aufnahmeöffnung gebildet, wie oben erwähnt. Die Führungsflächen für die Abutmentabsätze enden vorzugsweise an den Anschlägen der Aufnahmeöffnung, so dass der Einsatzstamm verdreht werden kann, sobald die Anschläge passiert wurden. Die axialen Führungsflächen oder -rillen können dabei in weitere Führungsflächen oder -rillen übergehen, die in Umfangsrichtung ausgereichtet sind und zu den Anschlägen der Aufnahmeöffnung führen. Auch können die Anschläge eine solche Umfangsführungsfläche bilden. Während des Einschiebens des Abutment in das Implantat kann also der Einsatzstamm formschlüssig entlang der Führungsflächen im Implantat axial geführt werden bis die axiale Ausgangsposition erreicht wird, in welchem das Abutment verdreht werden kann. Das Abutment wird dabei entlang der Führungsflächen zwangsgeführt und in die vordefinierte Ausrichtung bezüglich des Implantats geführt.

Der Einsatzstamm und die Aufnahmeöffnung sind in einfacher Weise zylindrisch ausgebildet. Sie können grundsätzlich aber auch eine konische Form aufweisen.

Im Unterschied zu einer Schraubverbindung zwischen Implantat und Abutment oder einem axialen Einpressen des Abutments ermöglicht ein Zahnersatz-System nach der vorliegenden Erfindung eine kontinuierliche lineare Einführbewegung. Mit einer kurzen Drehbewegung kann das Abutment in eine gewünschte vordefinierte Position gebracht werden, die ohne andauernden Kraftaufwand beibehalten werden kann. Eine schnelle und einfache Handhabung ohne wiederholte Drehbewegungen ermöglicht ein problemloses Einsetzen und Positionieren des Abutment im Implantat.

Bei dem dargestellten Zahnersatz-System wurde ein Abutment beschrieben, das zum Beispiel zur Aufnahme einer Krone geeignet. Grundsätzlich ist das Implantat aber auch geeignet ein Abutment, das durch einen Gingivaformer, ein Abdruckdruckteil oder ein Provisorium gegeben ist, aufzunehmen.

### KURZBESCHREIBUNG DER FIGUREN

Eine bevorzugte Ausführungsform der Erfindung wird im Folgenden anhand der Figuren dargestellt, die lediglich zur Erläuterung dienen und nicht einschränkend auszulegen sind. Aus den Figuren offenbar werdende Merkmale der Erfindung sollen einzeln und in jeder Kombination als zur Offenbarung der Erfindung gehörend betrachtet werden. In den Figuren zeigen:
- Fig. 1: drei-dimensionale Darstellung eines Zahnersatz-Systems gemäss der Erfindung mit einem Implantat und einem Abutment,
- Fig. 2a: Aufsicht auf das Zahnersatz-System mit einem Abutment in einer ersten Drehposition relativ zum Implantat,
- Fig. 2b: Detailansicht eines Einsatzstamms des Zahnersatz-Systems aus Figur 2a,
- Fig. 2c: Aufsicht auf das Zahnersatz-System mit dem Abutment in einer zweiten Drehposition,
- Fig. 3: Längsschnitt durch ein Implantat des Zahnersatz-Systems,
- Fig. 4: Längsschnitt durch ein Zahnersatz-System, bei dem das Abutment in das Implantat eingesetzt ist,
- Fig. 5a: Querschnitt durch ein Zahnersatz-System mit einem Abutment in einer ersten Drehposition relativ zum Implantat und
- Fig. 5b: Querschnitt durch ein Zahnersatz-System mit dem Abutment in einer zweiten Drehposition.

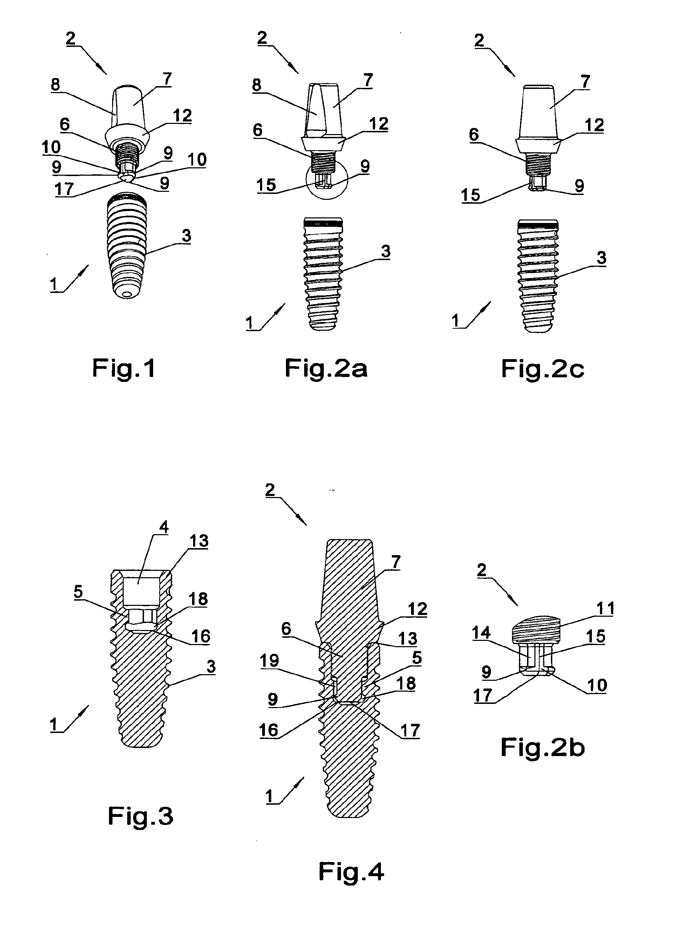

In Figur 1 ist ein Zahnersatz-System mit einem Implantat 1 und einem Abutment 2 gezeigt. Das Implantat 1 ist im Wesentlichen zylindrisch ausgebildet und verläuft im proximalen Bereich leicht konisch. Auf der Aussenumfangsfläche des Implantats 1 ist ein Aussengewinde 3 gezeigt, mit dem das Implantat in einen Kieferknochen eingeschraubt werden kann. Grundsätzlich sind andere Befestigungsmethoden im Kiefer denkbar, wie sie aus dem Stand der Technik bekannt sind. Am distalen Ende weist das Implantat 1 eine Aufnahmeöffnung 4 auf, wie in Figur 3 ersichtlich ist. Die Aufnahmeöffnung 4 verläuft axial konzentrisch zur Längsachse des Implantats 1. Eine von der Innenumfangsfläche der Aufnahmeöffnung 4 nach innen ragende Schulter ist in Umfangsrichtung in Teilbereichen unterbrochen, so dass sich drei radial nach innen ragende Anschläge 5 bilden, wovon in Figur 3 auf Grund der Schnittdarstellung nur einer auf der linken Seite ersichtlich ist. Die Anschläge 5 sind im Wesentlichen symmetrisch um die Längsachse verteilt. Die Aufnahmeöffnung 4 endet innerhalb des Implantats 1 mit einer Grundfläche 16, die mittig eine Mulde aufweisen kann. Zwischen der Schulter mit den Anschlägen 5 und der Grundfläche 16 ist ein aufgeweiteter Bereich 18 ausgebildet, der einen grösseren Radius als der Bereich mit den Schultern 5 aufweist.

Das Abutment 2 weist einen Einsatzstamm 6 und einen Träger 7 für eine Krone oder dergleichen auf. Einsatzstamm 6 und Träger 7 verlaufen entlang einer gemeinsamen Längsachse, könnten aber auch zu einander gewinkelt angeordnet sein. Der Träger 7 ist annähernd zylindrisch aufgebaut und ist an einer Seite abgeflacht, wobei die Abflachung 8 zur Ausrichtung der Krone auf dem Träger 7 dient. Der Einsatzstamm 6 umfasst einen dicken distalen Bereich mit grösserem Durchmesser und einen dünnen proximalen Bereich mit kleinem Durchmesser, an dessen Ende drei Absätze 9 angeordnet sind. Die Absätze 9 stehen radial vom proximalen Bereich ab, ohne über den distalen Bereich hinaus zu stehen und liegen auf einer gemeinsamen Ebene, die im Wesentlichen senkrecht zur Längsachse des Einsatzstamms 6 verläuft. Die Absätze 9 sind im Wesentlichen punktsymmetrisch um die Längsachse des Einsatzstamms in trigonaler Form ausgerichtet. Zwischen den Absätzen 9 sind Unterbrüche, bzw. Ausnehmungen 10 vorgesehen, an welchen der Radius des Einsatzstamms kleiner ist als an den Absätzen. Die Absätze bilden eine Art trigonale Abschlussfläche am Ende des Einsatzstamms mit Absatzbereichen von grösserem Radius und Ausnehmungsbereichen von kleinerem Radius. Die Absätze sind somit als 3-kant Absatz am Einsatzstamm ausgebildet. Die Abschlussfläche bildet eine Basalfläche 17, die im Implantat 1 aufliegen kann. Der distale Bereich kann am Aussenumfang eine wendelförmige Rille 1 aufweisen, die einen Kanal bildet, der vom proximalen Bereich in Richtung des Trägers 7 führt. Zwischen Träger 7 und Einsatzstamm 6 kann eine Schürze 12 ausgeformt sein, die einen grösseren Durchmesser als der distale Bereich des Einsatzstamms 6 aufweist. Die Schürze steht somit radial über den Einsatzstamm 6 hervor und kann in eingesetztem Zustand an einem distalen Rand 13 des Implantats 1 anschlagen.

In der gezeigten Darstellung weist der Einsatzstamm 6 drei Absätze 9 auf. Grundsätzlich könnten aber weniger oder mehr Absätze vorgesehen werden.

Wie in der Detailansicht des Ausschnitts des Einsatzstamms 6 der Figur 2a ersichtlich, ist auch die Mantelfläche des Umfangs des proximalen Bereichs des Einsatzstamm nicht kreisrund ausgebildet, sondern weist eine ebenfalls trigonale Form auf. Dabei wechseln sich flächige Sektionen 14 mit kantigen Sektionen 15 ab. Eine flächige Sektion 14 geht jeweils in einen Absatz 9 und eine kantige Sektion 15 in eine Ausnehmung 10 über. Dabei sind die kantigen Sektionen 15 zur Mitte der Ausnehmung 10 versetzt vorgesehen. Die Anschläge 5 am Innenumfang der Aufnahmeöffnung 4 sind ebenfalls trigonal ausgerichtet. Die Radien, bzw. die Durchmesser der kantigen Sektionen 15, der Absätze 9 und der Anschläge 5 sind derart auf einander abgestimmt, dass die Absätze 9 zwischen den Anschlägen 5 hindurch geführt und die kantigen Sektionen 15 zwischen den Anschlägen 5 zu liegen kommen, wenn das Abutment 2 in das Implantat 1 axial eingeschoben wird. Die Verteilung der kantigen Sektionen 15, der Absätze 9 und der Anschläge 5 in Umfangsrichtung ist derart vorgesehen, das ein kleines Drehspiel zwischen den kantigen Sektionen 15 und den Anschlägen 5 verbleibt, wenn das Abutment 2 in das Implantat 1 eingeführt ist, wie nachfolgend genauer erläutert wird.

In den Figuren 2a und 2c ist eine Ansicht des Abutments 2 in unterschiedlichen Drehpositionen gezeigt. In Figur 2a ist der Einsatzstamm 6 mit einem Absatz 9 gezeigt, der in der Figur rechts zu erkennen ist, während eine kantige Sektion 15 des distalen Bereichs nahezu mittig liegt. In Figur 2c wurde das Abutment 2 um ca. 30° gedreht, so dass die kantige Sektion 15 auf der linken Seite zu liegen kommt und der Absatz annähernd mittig liegt.

In Figur 4 ist das Abutment 2 in einer Einführdrehposition in das Implantat 1 axial eingeführt und ist in einer Ausgangsposition vor einem Verdrehen gezeigt. In der Ausgangsposition ist das Abutment 2 axial soweit in das Implantat 1 eingeschoben, dass die Basalfläche 17 des Einsatzstamms 6 gegen die Grundfläche 16 des Implantats 1 stösst. Zudem steht die Schürze 12 am oberen Rand 13 auf. Die Grundfläche 16 und der Rand 13 bilden einen Einführanschlag und die Basalfläche 17 und die Schürze 12 bilden einen Einführgegenanschlag, welche in eingeschobener Position die Einschubbewegung begrenzen. Das Abutment 2 kann daher nicht weiter in das Implantat 2 in axialer Einführrichtung eingeschoben werden. Zum Einschieben des Abutments wird der Einsatzstamm 6 relativ zur Aufnahmeöffnung 4 derart in einer ersten Drehposition ausgerichtet, dass die Ausnehmungen 10 den Anschlägen 5 gegenüberliegen und die Absätze 9 zwischen den Anschlägen vorbei gleiten können. Im gezeigten Beispiel sind drei verschiedene solcher Drehstellungen möglich. Es kann eine Markierung oder Indexierung an äusseren Bereichen von Implantat 1 und Abutment 2 vorgesehen werden, die von aussen zu sichtbar sind, so dass die Teile zu einander ausgerichtet werden können.

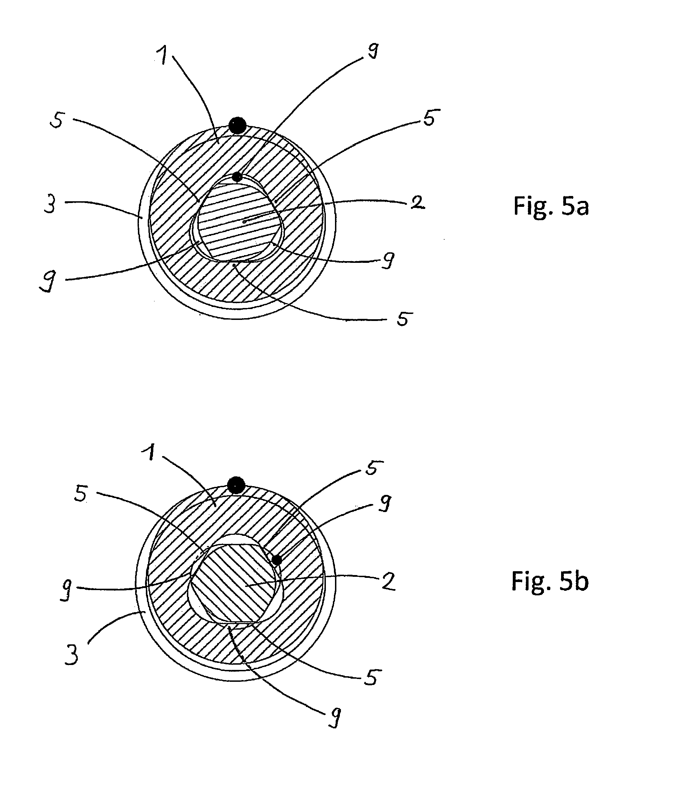

In Figur 5a sind Implantat 1 und Abutment 2 in der Einführdrehposition im Querschnitt gezeigt. Daraus ist ersichtlich, wie Absätze 9 zwischen den Anschlägen 5 zu liegen kommen, so dass das Abutment innerhalb des Implantats axial verschoben werden kann.

Beim Einführen des Abutments 2 in das Implantat 1 gleiten die Kanten der Absätze 9 zwischen den Anschlägen 5 hindurch und können dabei an einer axial verlaufenden Fläche der Schultern, bzw. Anschläge abgleiten. Die axialen Flächen, die geringfügig radial nach innen ragen, können als Führungsfläche beim Einschieben des Abutments 2 dienen. In der Ausgangsposition kommen die Absätze 9 axial hinter den Anschlägen 5 im aufgeweiteten Bereich 18 der Aufnahmeöffnung 4 zu liegen. Der proximale Bereich des Einsatzstamms 6 mit den flächigen Sektionen 14 und den kantigen Sektionen 15 kommt im Bereich der Anschläge 5 zwischen diesen zu liegen.

Von der Ausgangsposition kann das Abutment 2 relativ zum Implantat 1 um die Längsachse des Einsatzstamms 6 verdreht werden, wie bei den Figuren 2a und 2c beschrieben. Dabei werden die Absätze 9 innerhalb des aufgeweiteten Bereichs 18 unter, bzw. axial hinter die in die Aufnahmeöffnung 4 ragenden Anschläge 5 gedreht, so dass eine axiale Verriegelung des Abutments 2 innerhalb des Implantats 1 erfolgt, wie in Figur 5b ersichtlich ist. Das Abutment 2 ist mit seinen Absätzen 9 und der Basalfläche 17 in dieser Verriegelungsdrehposition formschlüssig zwischen den Anschlägen 5 und der Grundfläche 16 aufgenommen.

Die kantigen Flächen 15 stehen zwischen den Schultern 5 derart weit radial hervor, dass sie bei einer Drehbewegung an den Führungsflächen der Schultern in Drehrichtung anschlagen und diese begrenzen. Dabei ist der radial vorstehende Teil der kantigen Flächen 15 so schmal ausgebildet, dass zwischen den Anschlägen 5 und den kantigen Flächen 15 ein Drehspiel verbleibt, um welches der Einsatzstamm 6 innerhalb der Aufnahmeöffnung 4 um einen Drehwinkel in die Verriegelungsposition gedreht werden kann. Der frei bleibende Zwischenraum 19 zwischen den Schultern 5 und den kantigen Flächen 15 ist als Drainagekanal für einen Klebstoff vorgesehen. Aus dem Drainagekanal kann der Klebstoff weiter durch den wendelförmigen Kanal 11 im distalen Bereich des Einsatzstamms 6 abgeleitet werden.

Gemäss bevorzugter Ausführungsformen ist der distale Bereich des Einsatzstamms 6 im wesentlichen zylindrisch ausgebildet und passgenau auf die ebenfalls zylindrische Aufnahmeöffnung abgestimmt, so dass ein grosser Teil der in das Abutment eingeleiteten Kraft (zum Beispiel beim Kauen) vom zylindrischen Passsitz in das Implantat eingeleitet werden kann. Gemäss besonders bevorzugten Ausführungsformen ist der wendelförmige Kanal 11 derart in den zylindrischen Bereich des Einsatzstamms eingearbeitet, dass der Passsitz nicht beeinträchtigt ist, respektive die zylindrische Mantelfläche radial nicht nach aussen überragt wird.

Beim Einsetzen eines Abutments 2 in das Implantat 1 ist gemäss der vorliegenden Erfindung lediglich eine axiale Einführbewegung und eine kleine Drehbewegung um einen kurzen Drehwinkel nötig, um das Abutment in einer vorbestimmten Position zu plazieren und zu verriegeln. Beim Einschieben wird Klebstoff, der sich zwischen Abutment und Implantat befindet, verdrängt und übt eine Gegenkraft gegen die Einführbewegung des Abutments aus. Nach dem Eindrehen in die Verriegelungsposition, kann diese Gegenkraft von den Anschlägen 5 am Implantat aufgenommen werden, während überschüssiger Klebstoff durch die Drainageeinrichtung abgeleitet werden kann. Der dabei entstehende Druck, der das Abutment aus dem Implantat zu pressen sucht, wird also durch die axiale formschlüssige Verriegelung aufgenommen. So wird ein einfaches und für einen Patienten unproblematisches exaktes Einsetzen des Abutments im Implantat ermöglicht.

### LISTE DER BEZUGSZEICHEN

- 1: Implantat
- 2: Abutment
- 3: Aussengewinde
- 4: Aufnahmeöffnung
- 5: Anschlag
- 6: Einsatzstamm
- 7: Träger
- 8: Abflachung
- 9: Absatz
- 10: Ausnehmung
- 11: wendelförmige Rille
- 12: Schürze
- 13: Rand
- 14: flächige Sektion
- 15: kantige Sektion
- 16: Grundfläche
- 17: Basalfläche
- 18: aufgeweiteter Bereich
- 19: Zwischenraum

## Patentansprüche

1. Zahnersatz-System umfassend ein Implantat (1) zur Osseointegration in einen Kieferknochen und ein Abutment (2) mit einem Einsatzstamm (6), der in eine Aufnahmeöffnung (4) des Implantats (1) einsetzbar ist, wobei
- am Einsatzstamm (6) wenigstens ein zumindest teilweise radial zu einer Längsachse des Einsatzstamms verlaufender Absatz (9) ausgebildet ist,
- an einer Innenumfangsfläche der Aufnahmeöffnung (4) wenigstens ein zumindest teilweise radial verlaufender Anschlag (5) vorgesehen ist, und
- in einer ersten Drehposition zwischen Einsatzstamm (6) und Implantat (1) das Abutment (2) relativ zum Implantat (1) in einer axialen Richtung beweglich ist und in einer zweiten Drehposition, in der der Einsatzstamm (6) relativ zum Implantat (1) um einen Winkel in Bezug auf die erste Drehposition um die Längsachse verdreht ist, der wenigstens eine Absatz (9), den wenigstens einen Anschlag (5) derart axial hintergreift, dass das Abutment (2) im Implantat (1) in axialer Richtung fixiert ist,
**dadurch gekennzeichnet, dass** in der Aufnahmeöffnung (4) wenigstens ein Rotationsanschlag und am Einsatzstamm wenigstens ein Rotationsgegenanschlag (15) vorgesehen sind, die eine Drehbewegung des Abutments (2) relativ zum Implantat (1) begrenzen.

2. Zahnersatz-System nach Anspruch 1, **dadurch gekennzeichnet, dass** der wenigstens eine Absatz (9) eine Unterbrechung (10) in wenigstens einem Umfangsbereich aufweist.

3. Zahnersatz-System nach Anspruch 1 oder 2, **dadurch gekennzeichnet, dass** entlang der Umfangsrichtung des Einsatzstamms (6) mehrere Absätze (9) ausgebildet sind, die im wesentlichen radial in unterschiedliche Richtungen vom Einsatzstamm abragen.

4. Zahnersatz-System nach einem der vorhergehenden Ansprüche, **dadurch gekennzeichnet, dass** mehrere Absätze (9) auf einer Ebene in Umfangsrichtung um den Einsatzstamm (6) verteilt sind.

5. Zahnersatz-System nach einem der vorhergehenden Ansprüche, **dadurch gekennzeichnet, dass** mehrere Absätze (9) symmetrisch zur Längsachse des Einsatzstamms (6) angeordnet sind.

6. Zahnersatz-System nach einem der vorhergehenden Ansprüche, **dadurch gekennzeichnet, dass** in der zweiten Drehposition der wenigstens eine Absatz (9) mit dem wenigstens einen Anschlag (5) eine formschlüssige axiale Verriegelung zwischen Einsatzstamm (6) und Implantat (1) bilden.

7. Zahnersatz-System nach einem der vorhergehenden Ansprüche, **dadurch gekennzeichnet, dass** mehrere Absätze (9) als N-kant-Absatz am Einsatzstamm (6) ausgebildet sind, wobei N die Anzahl der Absätze bezeichnet.

8. Zahnersatz-System nach einem der vorhergehenden Ansprüche, **dadurch gekennzeichnet, dass** der wenigstens eine Absatz (9) an einem proximalen Ende des Einsatzstamm vorgesehen sind.

9. Zahnersatz-System nach einem der vorhergehenden Ansprüche, **dadurch gekennzeichnet, dass** in oder an der Aufnahmeöffnung (4) ein Einführanschlag (13; 16) und am Einsatzstamm ein Einführgegenanschlag (12; 17) vorgesehen sind, die beim Einsetzen des Abutments in das Implantat die axiale Einführbewegung des Abutment begrenzen.

10. Zahnersatz-System nach einem der vorhergehenden Ansprüche, **dadurch gekennzeichnet, dass** bei eingeführtem Abutment (2) der Einsatzstamm (6) mit einer Basalfläche (17) auf einer Grundfläche (16) in der Aufnahmeöffnung (4) aufliegt.

11. Zahnersatz-System nach einem der vorhergehenden Ansprüche, **dadurch gekennzeichnet, dass** der wenigstens eine Absatz (9) durch eine Vertiefung in einer Mantelfläche des Abutments (2) und/oder durch eine radial von der Mantelfläche hervorstehende Rippe ausgebildet ist.

12. Zahnersatz-System nach einem der vorhergehenden Ansprüche, **dadurch gekennzeichnet, dass** am Innenumfang der Aufnahmeöffnung (4) in axialer Richtung verlaufende Führungsflächen oder -rillen vorgesehen sind, zwischen welchen der wenigstens eine Absatz axial geführt werden.

13. Zahnersatz-System nach einem der vorhergehenden Ansprüche, **dadurch gekennzeichnet, dass** der Einsatzstamm eine Mantelfläche (14, 15) mit einer nicht kreisrunden Umfangsform aufweist, die in eine entsprechend nicht kreisrunde Innenumfangsform der Aufnahmeöffnung des Implantats passt, wobei ein Spiel in Drehrichtung zwischen Abutment (2) und Implantat (1) verbleibt.

14. Zahnersatz-System nach einem der vorhergehenden Ansprüche, **dadurch gekennzeichnet, dass** der wenigstens eine Absatz (9) des Einsatzstamm mit dem wenigstens einen Anschlag (5) in der Aufnahmeöffnung (4) eine Bajonettverbindung ausbildet.

15. Zahnersatz-System nach einem der vorhergehenden Ansprüche, **dadurch gekennzeichnet, dass** das Abutment (2) durch einen Gingivaformer, ein Abdruckdruckteil oder ein Provisorium gegeben ist.

## Claims

1. A denture system comprising an implant (1) for osseointegration into a jawbone, and an abutment (2) with an insertion stem (6) that can be inserted into a receiving opening (4) of the implant (1), wherein at least one shoulder (9) is formed on the insertion stem (6), said shoulder (9) extending at least in part radially with respect to a longitudinal axis of the insertion stem,
- at least one stop (5) is provided on an inner circumferential surface of the receiving opening (4), said stop (5) extending at least in part radially,
- and , in a first rotation position between insertion stem (6) and implant (1), the abutment (2) is movable relative to the implant (1) in an axial direction, and, in a second rotation position, in which the insertion stem (6) is rotated about the longitudinal axis relative to the implant (1) by an angle with respect to the first rotation position, at least one shoulder (9) engages axially behind a stop (5), in such a way that the abutment (2) is fixed in the axial direction in the implant (1 **characterised in that** at least one rotation stop in the receiving opening (4) and at least one mating rotation stop (15) on the insertion stem are provided, which limit a rotation movement of the abutment (2) relative to the implant (1)

2. The denture system as claimed in claim 1, **characterized in that** the at least one shoulder (9) has an interruption (10) in at least one circumferential area.

3. The denture system as claimed in claim 1 or 2, **characterized in that** several shoulders (9) are formed along the circumferential direction of the insertion stem (6) and protrude substantially radially from the insertion stem in different directions.

4. The denture system as claimed in one of the preceding claims, **characterized in that** several shoulders (9) are distributed in the circumferential direction about the insertion stem (6) on one plane.

5. The denture system as claimed in one of the preceding claims, **characterized in that** several shoulders (9) are arranged symmetrically with respect to the longitudinal axis of the insertion stem (6).

6. The denture system as claimed in one of the preceding claims, **characterized in that**, in the second rotation position, the at least one shoulder (9) and the at least one stop (5) together produce a form-fit axial lock between insertion stem (6) and implant (1).

7. The denture system as claimed in one of the preceding claims, **characterized in that** several shoulders (9) are formed as an N-edge shoulder on the insertion stem (6), where N designates the number of shoulders.

8. The denture system as claimed in one of the preceding claims, **characterized in that** the at least one shoulder (9) is provided at a proximal end of the insertion stem.

9. The denture system as claimed in one of the preceding claims, **characterized in that** an insert stop (13; 16) in or on the receiving opening (4) and a mating insert stop (12; 17) on the insertion stem are provided which, upon insertion of the abutment into the implant, limit the axial insertion movement of the abutment.

10. The denture system as claimed in one of the preceding claims, **characterized in that**, with the abutment (2) inserted, the insertion stem (6) bears with a base surface (17) on a bottom surface (16) in the receiving opening (4).

11. The denture system as claimed in one of the preceding claims, **characterized in that** the at least one shoulder (9) is formed by a depression in a jacket surface of the abutment (2) and/or by a rib protruding radially from the jacket surface.

12. The denture system as claimed in one of the preceding claims, **characterized in that** guide surfaces or guide grooves are provided which extend in the axial direction on the inner circumference of the receiving opening (4) and between which, the at least one shoulder (9) is axially guided.

13. The denture system as claimed in one of the preceding claims, **characterized in that** the insertion stem has a jacket surface (14, 15) with a non-circular circumferential shape which fits into a correspondingly non-circular inner circumferential shape of the receiving opening of the implant, wherein play remains in the direction of rotation between abutment (2) and implant (1).

14. The denture system as claimed in one of the preceding claims, **characterized in that** the at least one shoulder (9) of the insertion stem forms a bayonet connection with the at least one stop (5) in the receiving opening (4).

15. The denture system as claimed in one of the preceding claims, **characterized in that** the abutment (2) is in the form of a gingiva shaper, an impression piece or a temporary restoration.

## Revendications

1. Système de prothèse dentaire comprenant un implant (1) pour l'ostéo-intégration dans un os de la mâchoire et un pilier (2) avec une souche d'insert (6) qui peut être insérée dans une ouverture de réception (4) de l'implant (1),
- au moins un épaulement (9) s'étendant au moins en partie radialement par rapport à un axe longitudinal de la souche d'insert étant réalisé sur la souche d'insert (6),
- au moins une butée (5) s'étendant au moins en partie radialement étant prévue sur une surface périphérique interne de l'ouverture de réception (4), et
- le pilier (2) pouvant être déplacé par rapport à l'implant (1) dans une direction axiale dans une première position de rotation entre la souche d'insert (6) et l'implant (1), et, dans une deuxième position de rotation, dans laquelle la souche d'insert (6) est tournée par rapport à l'implant (1) suivant un certain angle par rapport à la première position de rotation autour de l'axe longitudinal, l'au moins un épaulement (9) venant en prise axialement par l'arrière avec l'au moins une butée (5) de telle sorte que le pilier (2) soit fixé dans l'implant (1) dans la direction axiale, **caractérisé en ce que** dans l'ouverture de réception (4) est prévue au moins une butée rotative et sur la souche d'insert est prévue au moins une contre-butée rotative (15), lesquelles limitent un mouvement de rotation du pilier (2) par rapport à l'implant (1).

2. Système de prothèse dentaire selon la revendication 1, **caractérisé en ce que** l'au moins un épaulement (9) présente une interruption (10) dans au moins une zone périphérique.

3. Système de prothèse dentaire selon la revendication 1 ou 2, **caractérisé en ce que** le long de la direction périphérique de la souche d'insert (6) sont réalisés plusieurs épaulements (9), lesquels dépassent essentiellement radialement dans différentes directions depuis la souche d'insert.

4. Système de prothèse dentaire selon l'une quelconque des revendications précédentes, **caractérisé en ce que** plusieurs épaulements (9) sont répartis sur un plan dans la direction périphérique autour de la souche d'insert (6).

5. Système de prothèse dentaire selon l'une quelconque des revendications précédentes, **caractérisé en ce que** plusieurs épaulements (9) sont disposés symétriquement par rapport à l'axe longitudinal de la souche d'insert (6).

6. Système de prothèse dentaire selon l'une quelconque des revendications précédentes, **caractérisé en ce que** dans la deuxième position de rotation, l'au moins un épaulement (9) forme avec l'au moins une butée (5) un verrouillage axial par engagement par correspondance de forme entre la souche d'insert (6) et l'implant (1).

7. Système de prothèse dentaire selon l'une quelconque des revendications précédentes, **caractérisé en ce que** plusieurs épaulements (9) sont réalisés sous forme d'épaulement à N côtés au niveau de la souche d'insert (6), N étant le nombre des épaulements.

8. Système de prothèse dentaire selon l'une quelconque des revendications précédentes, **caractérisé en ce que** l'au moins un épaulement (9) est prévu sur une extrémité proximale de la souche d'insert.

9. Système de prothèse dentaire selon l'une quelconque des revendications précédentes, **caractérisé en ce que** dans ou sur l'ouverture de réception (4) est prévue une butée d'insertion (13 ; 16) et sur la souche d'insert est prévue une contre-butée d'insertion (12 ; 17), lesquelles, lors de l'insertion du pilier dans l'implant, limitent le mouvement axial d'insertion du pilier.

10. Système de prothèse dentaire selon l'une quelconque des revendications précédentes, **caractérisé en ce que** lorsque le pilier (2) est inséré, la souche d'insertion (6) repose avec une surface basale (17) sur une surface de fond (16) dans l'ouverture de réception (4).

11. Système de prothèse dentaire selon l'une quelconque des revendications précédentes, **caractérisé en ce que** l' au moins un épaulement (9) est réalisé par un renfoncement dans une surface d'enveloppe du pilier (2) et/ou par une nervure faisant saillie radialement depuis la surface d'enveloppe.

12. Système de prothèse dentaire selon l'une quelconque des revendications précédentes, **caractérisé en ce qu'**à la périphérie interne de l'ouverture de réception (4) sont prévues des surfaces ou des rainures de guidage s'étendant dans la direction axiale, entre lesquelles est guidé axialement l'au moins un épaulement.

13. Système de prothèse dentaire selon l'une quelconque des revendications précédentes, **caractérisé en ce que** la souche d'insert présente une surface d'enveloppe (14, 15) avec une forme périphérique non circulaire qui s'ajuste dans une forme périphérique interne non circulaire correspondante de l'ouverture de réception de l'implant, un jeu subsistant dans la direction de rotation entre le pilier (2) et l'implant (1).

14. Système de prothèse dentaire selon l'une quelconque des revendications précédentes, **caractérisé en ce que** l'au moins un épaulement (9) de la souche d'insert constitue avec l'au moins une butée (5) dans l'ouverture de réception (4) une connexion de type à baïonnette.

15. Système de prothèse dentaire selon l'une quelconque des revendications précédentes, **caractérisé en ce que** le pilier (2) est réalisé par un façonneur gingival, une partie de pression d'empreinte ou une prothèse provisoire.
